# EUROPEAN PATENT APPLICATION

(11) **EP 2 628 619 A2**
(43) Date of publication of application: **21.08.2013**
(21) Application number: 13153915.7
(22) Date of filing: 04.02.2013
(51) Int. Cl.: B60J 7/057

(54) **Electric connection structure for a sunroof device**

(30) Priority: 20.02.2012 JP 2012033741
(71) Applicant: Yachiyo Industry Co., Ltd., Sayama-shi Saitama (JP)
(72) Inventor: Iwaya, Tsutomu, Tochigi-ken (JP)
(74) Representative: Schumacher & Willsau

(57) **Abstract**

Provided is an electric connection structure for a sunroof device (3) including a slidable sunroof panel (4) having a first electric device (26) mounted thereto, the electric connection structure comprising: vehicle body-side lead wires (54) each having one end connected to a second electric device (37, 38, 39) mounted to a vehicle body; panel-side lead wires (56) each having one end connected to the first electric device; vehicle body-side electrodes (52b) provided to a part of the vehicle body and connected to the other ends of the vehicle body-side lead wires, respectively; and panel-side electrodes (58) provided to a part of the sunroof panel and connected to the other ends of the panel-side lead wires, respectively, wherein the vehicle body-side and panel-side electrodes are arranged such that the panel-side electrodes contact the vehicle body-side electrodes, respectively, when the sunroof panel is at a closed position.

## Description

### TECHNICAL FIELD

The present invention relates to an electric connection structure for establishing electric connection between an electric device mounted to a slidable sunroof panel and another electric device mounted to a vehicle body.

### BACKGROUND OF THE INVENTION

Some motor vehicles are fitted with a sunroof including a transparent sunroof panel, such as a glass panel, for allowing light to enter the passenger compartment. The sunroof panel may be fixed to the roof of the vehicle or may be movable so as to be selectively opened and closed. The sunroof brightens the interior of the vehicle and provides a sense of openness on the one hand, but may excessively brighten or warm the interior of the vehicle. To control the excessive admission of sunlight, a sunshade may be provided under the sunroof panel so as to be slidably moveable between an open position for admitting the sunlight and a closed position for blocking the sunlight.

When the sunroof is configured to enable tilting of the sunroof panel for ventilation, it may be desirable that the sunshade is integral with the sunroof panel so that the sunshade can be tilted together with the sunroof panel to allow the passenger to recognize whether the sunroof panel is opened (tilted) even when the sunshade is closed. As a sunshade device for fulfilling such a need, JP 9-249027A discloses a sunshade device including a transparent case attached to the passenger compartment side of a tiltable sunroof panel, a fixed light-polarizing film fixedly disposed in the case, a movable light-polarizing film contained in the case so as to be slidable relative to the fixed light-polarizing film, and a drive mechanism attached to the passenger compartment side of the sunroof panel to slidably move the movable light-polarizing film such that the light-blocking ratio of the sunshade device can be adjusted continuously by changing the position of the movable light-polarizing film relative to the fixed light-polarizing film.

As an alternative to a conventional mechanical sunshade, an electric sunshade has been proposed. An electric sunshade may comprise a light control film including a pair of resin films each having a transparent conductive layer coated thereon, and light control particles such as liquid crystal particles suspended in an appropriate medium disposed between the conductive layers, such that the light-transmitting and/or light-scattering characteristics of the light control film can be varied continuously by controlling the voltage applied across the conductive layers and thereby controlling the orientation of the light control particles therebetween (see JP 2009-534557A, for example). Such a light control film may be incorporated into a glass panel to provide a voltage-regulated light control sunroof panel in which the light-transmitting and/or light-scattering characteristics of the sunroof panel can be adjusted continuously by controlling the voltage applied to the incorporated light control film.

In a case where the light control sunroof panel is fixed to the roof of the vehicle, feeding of electric power to the light control film or any other electric device mounted to the sunroof panel can be readily achieved. However, in a case where the sunroof panel is adapted to be slidable along guide rails in the fore-and-aft direction of the vehicle body to selectively open the opening formed in the vehicle roof for ventilation or for any other purpose, an electric power feeding structure for the electric device mounted to the sunroof panel may become complicated. Namely, to connect the electric device mounted to the sunroof panel with a power source outside the sunroof panel by means of lead wires without interfering with the sliding movement of the sunroof panel, it may be necessary to use a caterpillar-type lead wire holder or a mechanism for winding the lead wires around a reel, for example, and these would lead to a higher cost of the sunroof device. Further, these additional mechanisms would require their installation spaces, and thus, would result in reduction in size of the sunroof panel and/or the passenger compartment.

When a vehicle fitted with a sunroof device including a slidable sunroof panel travels at a high speed while keeping the sunroof panel open, wind noises may be created and/or an excessive amount of air may be introduced into the passenger compartment. In order to control the wind noises and/or the airflow created by the sunroof device, a deflector device is often provided in a front part of the roof opening. Typically, the deflector device includes a blade extending along the front edge of the roof opening and urged upward by a spring such that the blade is retracted against the spring force when the sunroof panel is closed, and is deployed under the spring force when the sunroof panel is opened (see JP 2006-168439A, for example).

### SUMMARY OF THE INVENTION

In view of the aforementioned problems in the prior art, a primary object of the present invention is to provide an electric connection structure for a sunroof device including a slidable sunroof panel such that electric connection between an electric device mounted to a sunroof panel and another electric device mounted to a vehicle body can be reliably established by the electric connection structure at least when the slide panel is closed, with a simple structure capable of avoiding reduction in size of the sunroof panel and/or the passenger compartment and lowering the total cost of the sunroof device.

To achieve such an object, the present invention provides an electric connection structure for a sunroof device including a sunroof panel having a first electric device mounted thereto, the sunroof panel being slidable in a fore-and-aft direction of a vehicle body along guide rails to selectively open and close an opening formed in a roof of the vehicle body, the electric connection structure comprising: a pair of vehicle body-side lead wires each having one end connected to a second electric device mounted to the vehicle body; a pair of panel-side lead wires each having one end connected to the first electric device; a pair of vehicle body-side electrodes provided to a part of the vehicle body and connected to the other ends of the vehicle body-side lead wires, respectively; and a pair of panel-side electrodes provided to a part of the sunroof panel and connected to the other ends of the panel-side lead wires, respectively, wherein the vehicle body-side electrodes and the panel-side electrodes are arranged such that the panel-side electrodes contact the vehicle body-side electrodes, respectively, when the sunroof panel is at a closed position where the sunroof panel closes the opening.

According to this structure, when the sunroof panel is at the closed position, the panel-side electrodes contact the vehicle body-side electrodes, respectively, to establish electric connection between the first electric device mounted to the sunroof panel and the second electric device mounted to the vehicle body. This electric connection structure is realized by a simple structure including the vehicle body-side electrodes provided to the vehicle body and the panel-side electrodes provided to the sunroof panel, and thus, the electric connection structure can avoid reduction in size of the sunroof panel and/or the passenger compartment and lower the total cost of the sunroof device.

In a preferred embodiment of the present invention, the sunroof device is configured to tilt up the sunroof panel, and the panel-side electrodes are provided in a front part of the sunroof panel such that the panel-side electrodes are kept in contact with the vehicle body-side electrodes, respectively, when the sunroof panel is in a positional range from the closed position to a tilt-up position.

According to this structure, electric connection between the first electric device mounted to the sunroof panel and the second electric device mounted to the vehicle body can be maintained by the electric connection structure not only when the sunroof panel is at the closed position but also during a tilt-up operation of the sunroof panel.

In a preferred embodiment of the present invention, the electric connection structure further comprises: a sunroof frame including a pair of side frames extending in the fore-and-aft direction along either side edge of the opening to serve as the guide rails and a front frame connecting front ends of the side frames to each other; and a deflector device mounted to the sunroof frame and comprising a blade extending along a front edge of the opening, the deflector device being configured to move the blade between a retracted position inside the roof and a deployed position outside the roof in response to forward and rearward movement of the sunroof panel, respectively, wherein the vehicle body-side electrodes are provided to a part of the deflector device.

According to this structure, the electric connection structure can be realized by effectively utilizing an existing deflector device, and hence, the structure can be simplified.

Preferably, the deflector device further comprises: a pair of stays extending in the fore-and-aft direction along either side edge of the opening, having a rotation axis spaced rearward from the blade, and holding the blade so as to be rotatable about the rotation axis; and an urging mechanism configured to urge the stays upward, wherein the vehicle body-side electrodes are provided to upper surfaces of the stays, respectively.

According to this structure, the vehicle body-side electrodes, which are provided to the upper surfaces of the stays urged upward by the urging mechanism, can be reliably brought into contact with the panel-side electrodes.

Further preferably, the electric connection structure further comprises a pair of downward protrusions provided to front parts of the sunroof panel laterally coinciding with the stays, respectively, wherein the panel-side electrodes are provided at lower ends of the downward protrusions, respectively.

According to this structure, the panel-side electrodes can easily and reliably contact the vehicle body-side electrodes, allowing the stays of the deflector device to be used as a part of the electric connection structure, and thus contributing to simplify the electric connection structure.

In a preferred embodiment of the present invention, the first electric device comprises a light control film having at least one of light-transmitting and light-scattering characteristics variable according to a voltage applied thereto, and the second electric device comprises a power supply system for generating a voltage to be supplied to the light control film.

According to this structure, the electric connection structure allows electric power to be supplied reliably from the power supply system to the light control film mounted to the sunroof panel at least when the sunroof panel is at the closed position so that the light-transmitting and/or light-scattering characteristics of the light control film can be adjusted by controlling the voltage applied thereto.

As is described in the foregoing, according to the present invention, it is possible to provide an electric connection structure for a sunroof device including a slidable sunroof panel such that electric connection between an electric device mounted to the sunroof panel and another electric device mounted to the vehicle body can be established by the electric connection structure at least when the slide panel is closed, with a simple structure capable of avoiding reduction in size of the sunroof panel and/or the passenger compartment and lowering the total cost of the sunroof device.

### BRIEF DESCRIPTION OF THE DRAWINGS

Now the present invention is described in the following with reference to the appended drawings, in which:
- Figure 1: is a schematic plan view of a vehicle roof according to an embodiment of the present invention;
- Figure 2: is a cross-sectional view taken along line II-II in Figure 1;
- Figure 3: is an exploded perspective view of a sunroof panel shown in Figure 1;
- Figure 4: is an exploded perspective view of a light control panel shown in Figure 3;
- Figures 5A and 5B: are each a schematic view showing a cross section of a light control film shown in Figure 4;
- Figure 6: is a cross-sectional view taken along line VI-VI in Figure 1;
- Figure 7: is a cross-sectional view taken along line VII-VII in Figure 2;
- Figure 8: is a cross-sectional view taken along line VIII-VIII in Figure 7 and showing a state in which the sunroof panel is closed; and
- Figure 9: is a cross-sectional view similar to Figure 8 and showing a state in which the sunroof panel is partially opened.

### DETAILED DESCRIPTION OF THE PREFERRED EMBODIMENTS

In the following description of an embodiment of an electric connection structure for an automotive sunroof device according to the present invention, directions such as a fore-and-aft direction and a lateral direction are defined with respect to the direction of travel of a vehicle, and component parts having an identical or similar structure or function, such as a pair of component parts provided on either side of the vehicle, will be denoted by reference signs including a common numeral suffixed with letters, such as "L" and "R" indicating "left" and "right," respectively, "F" indicating "front," and "U" and "L" indicating "upper" and "lower," respectively. For example, a pair of side frames provided on either side of the vehicle will be denoted by reference signs 7L (left side frame) and 7R (right side frame), respectively, and when there is no need to distinguish the left and right side frames from each other, they will be simply referred to as the side frames 7 or each side frame 7.

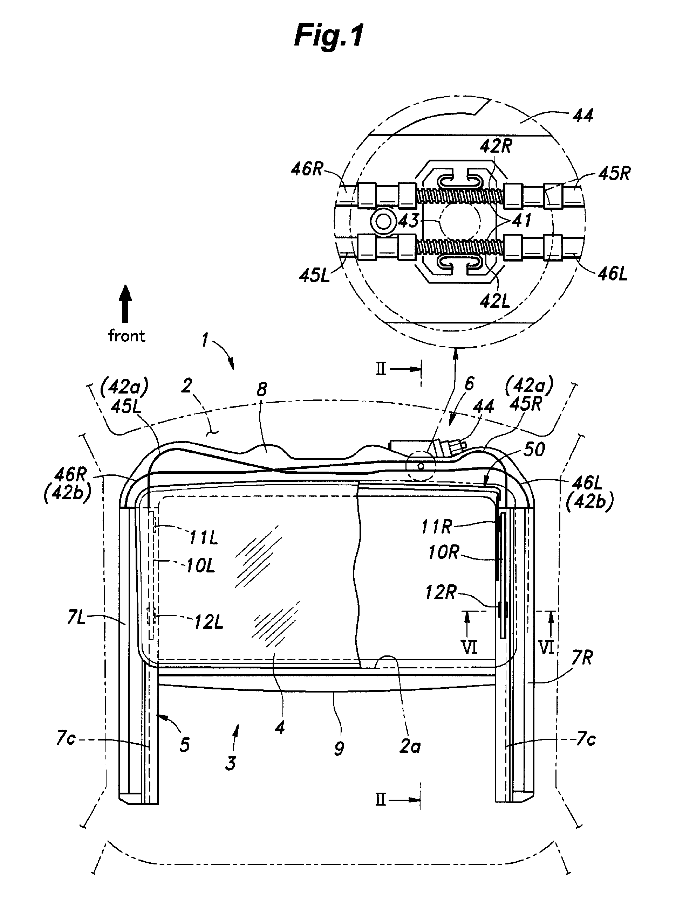

Figure 1 is a plan view of a roof 1 of a motor vehicle, in which some parts are shown broken away for illustrative purposes. As shown in Figure 1, the roof 1 includes a fixed roof 2 forming a top part of an outer shell of the vehicle and having a rectangular opening 2a formed in a front part thereof, and a sunroof device 3 including a sunroof panel 4 which is slidably moved in the fore-and-aft direction between a closed position for closing the opening 2a and an open position for opening the same.

The sunroof device 3 includes a sunroof frame 5 mounted to the roof 1 to surround the opening 2a and slidably support the sunroof panel 4, and a drive device 6 for sliding the sunroof panel 4 in the fore-and-aft direction to selectively open and close the opening 2a and for selectively tilting up the sunroof panel 4 such that the rear end of the sunroof panel 4 is lifted.

The sunroof frame 5 includes a pair of side frames 7L and 7R extending in the fore-and-aft direction along either side edge of the opening 2a, a front frame 8 extending along the front edge of the opening 2a and connecting the front ends of the side frames 7 to each other, and a center frame 9 extending along the rear edge of the opening 2a and connecting longitudinally intermediate parts of the side frames 7 to each other. Each side frame 7 is formed by extrusion molding an aluminum alloy material, for example, while the front frame 8 and the center frame 9 are formed by injection molding a resin material, for example.

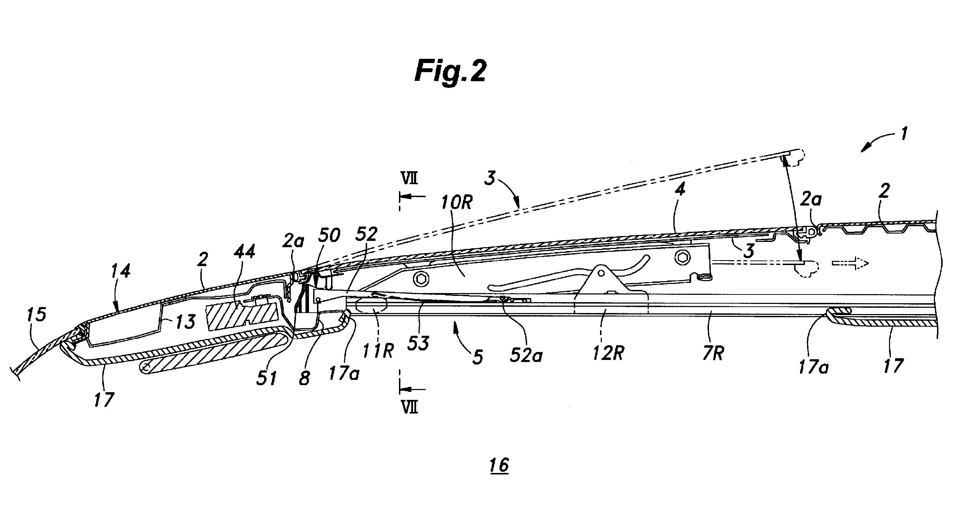

With additional reference to Figure 2, a pair of panel brackets 10L and 10R are attached to the under surface of the sunroof panel 4 on either side thereof, such that the panel brackets 10L and 10R extend in the fore-and-aft direction. The panel brackets 10L and 10R are slidably supported by the side frames 7L and 7R via front sliders 11L and 11R and rear sliders 12L and 12R, respectively. Each rear slider 12 is coupled to the corresponding panel bracket 10 via a cam mechanism, which causes the sunroof panel 4 to tilt in response to movement of the rear slider 12 relative to the panel bracket 10 when the rear slider 12 is in a first predetermined positional range in the fore-and-aft direction, and causes the sunroof panel 4 to slide in the fore-and-aft direction together with the rear slider 12 by locking the relative movement between the rear slider 12 and the panel bracket 10 when the rear slider 12 is in a second predetermined positional range in the fore-and-aft direction, where the second predetermined positional range is defined on the rear side of the first predetermined positional range.

Attached to the underside of the fixed roof 2 is a front roof rail 13 which extends along the front edge of the fixed roof 2 and has a cross section that is convex downward, and the fixed roof 2 and the front roof rail 13 jointly form a front roof frame 14 having a closed cross section. A windshield 15 is disposed on the front side of the front roof frame 14. Further, a roof lining 17 having an opening 17a slightly smaller than the opening 2a in the fixed roof 2 is disposed beneath the fixed roof 2 to define a vehicle cabin 16. The fixed roof 2 and the roof lining 17 define a space therebetween in which the sunroof device 3 is mounted. In this embodiment, the sunroof device 3 is of an inbuilt type in which the sunroof panel 4 is driven to slide rearward inside the space defined between the fixed roof 2 and the roof lining 17.

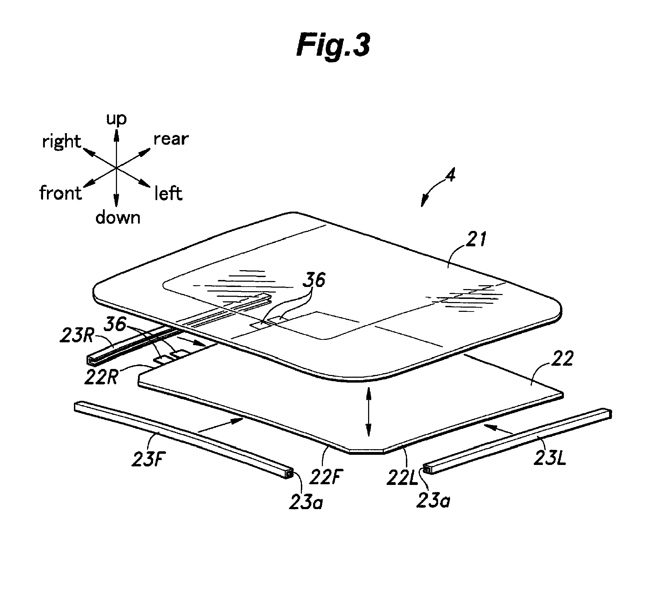

With reference to Figure 3, the sunroof panel 4 comprises: a glass panel 21 having a peripheral profile corresponding to the shape of the opening 2a in the fixed roof 2 and forming a top surface of the roof 1 jointly with the fixed roof 2; a light control panel 22 secured to the underside of the glass panel 21; and three retaining members 23 (23F, 23R, 23L) attached to the underside of the glass panel 21 along the front, right and left edges of the glass panel 21, respectively, to retain the light control panel 22.

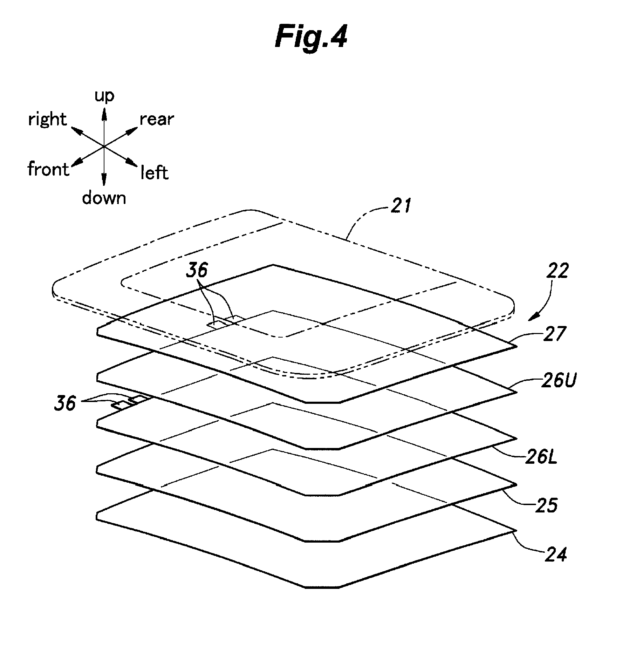

As shown in Figure 4, the light control panel 22 comprises: a resin panel 24 disposed at the lowermost part of the light control panel 22; two light control films 26 (a lower light control film 26L and an upper light control film 26U) disposed on the top of the resin panel 24; and a UV-IR cut film 27 disposed on the top of the upper light control film 26U. Each pair of adjoining members of the light control panel 22 are attached to each other by a double-sided adhesive film 25 interposed therebetween, though only the double-sided adhesive film 25 disposed between the resin panel 24 and the lower light control film 26L is shown in Figure 4.

The resin panel 24 is preferably made of polycarbonate, which has excellent impact resistance, heat resistance, resistance to burning, and transparency, and it is preferable if the under surface or each of the under and top surfaces of the resin panel 24 is hard-coated. A resin panel made of polycarbonate and provided with a melamine-based hard coat may be commercially available from Teijin Chemicals Ltd. under the product name of Panlite (registered trademark) PC-8199, for example. The resin panel 24 is disposed on the passenger compartment side of the light control panel 22 and functions to protect the light control films 26. To achieve such a function, the resin panel 24 preferably has a thickness of 0.8 mm or greater.

Preferably, the double-sided adhesive film 25 is of a base-less type and has high transparency. Such a double-sided adhesive film may be commercially available from DIC Corporation under the product name of Z87012W (thickness t = 50µm), for example.

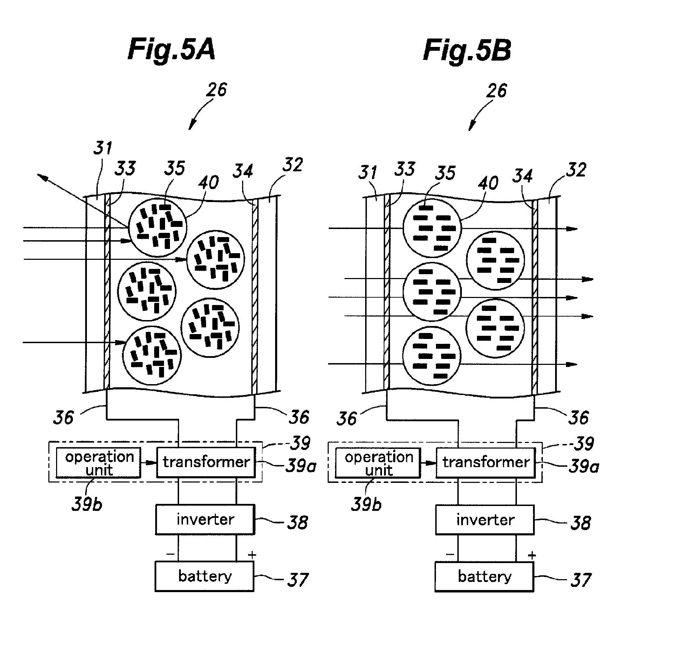

With additional reference to Figures 5A and 5B, each light control film 26 comprises: a pair of transparent resin films 31 and 32; a pair of transparent conductive layers 33 and 34 coated on inner surfaces of the pair of transparent resin films 31 and 32, respectively; and light control particles 35 dispersed between the two conductive layers 33 and 34. A pair of bus bars 36 is connected to the right edges of the conductive layers 33 and 34, respectively, to receive an electric voltage supplied from a power supply system fixedly mounted to the vehicle. In this embodiment, the power supply system includes a battery 37, an inverter 38 which is connected to the battery 37 to convert a DC voltage from the battery 37 into an AC voltage, and a voltage control device 39 connected to the inverter 38 to control the AC voltage output from the inverter 38, where the voltage control device 39 includes a variable transformer 39a and an operation unit 39b. It is to be noted that the bus bars 36 are electrically connected to the power supply system via a later-described electric connection structure when the sunroof panel 4 is in a predetermined state, such as when the sunroof panel 4 is at the closed position, and Figures 5A and 5B show a state in which the bus bars 36 are electrically connected to the power supply system. The AC voltage output from the variable transformer 39a and applied across the conductive films 33 and 34 via the bus bars 36 is controlled in accordance with an operation performed on the operation unit 39b by a passenger, so that the light control particles 35 respond to the controlled voltage to vary at least one of the light-transmitting and light-scattering characteristics of the light control film 26. The light control particles 35 may be liquid crystal particles or other particles suspended in an appropriate medium. In the illustrated embodiment, droplets 40 containing the light control particles 35 are dispersed between the resin films 31 and 32. Such a light control film 26 may be commercially available from Nippon Sheet Glass Co., Ltd., under the product name of UMU film (registered trademark), for example.

When no voltage is applied to the light control film 26, the light control particles 35 are oriented in random directions as shown in Figure 5A, and incident light is absorbed or diffuse-reflected by the light control particles 35 and cannot pass through the light control film 26; namely, the light control film 26 becomes opaque (or translucent). On the other hand, when an AC voltage of a sufficient amplitude is applied to the light control film 26, the light control particles 35 are oriented in parallel with the direction of the electric field as shown in Figure 5B, and incident light is allowed to pass straight through the light control film 26. Thus, the transparency of the light control film 26 is increased gradually as the amplitude of the AC voltage applied to the light control film 26 is increased.

As shown in Figure 3, the three retaining members 23 are disposed to extend along the front, right and left edges of the glass panel 21 in a rectangular C-shape to retain the light control panel 22 at a central portion of the glass panel 21 such that the light control panel 22 covers a substantially entire region of the glass panel 21 between the panel brackets 10 except for a peripheral portion of the glass panel 21. More specifically, the right retaining member 23R and the left retaining member 23L are arranged in parallel with each other, and the front retaining member 23F is disposed to extend perpendicularly to the right retaining member 23R and the left retaining member 23L. Each retaining member 23 is bonded to the underside of the glass panel 21 by means of a double-sided adhesive tape.

Each retaining member 23 comprises an elongated member having a groove 23a formed therein so as to have the same rectangular C-shaped cross section throughout its length, and is disposed such that the groove 23a opens toward the center of the glass panel 21 or toward the region covered by the light control panel 22. The front edge 22F, right edge 22R and left edge 22L of the light control panel 22 are inserted into the grooves 23a of the front retaining member 23F, right retaining member 23R and left retaining member 23L, respectively, whereby the edges 22F, 22R and 22L are gripped by the corresponding retaining members 23F, 23R and 23L. As a result, the light control panel 22 is retained under the glass panel 21 by the three retaining members 23. It is to be noted that, though not shown in the drawings, the parts of the right retaining member 23R coinciding with the two pairs of bus bars 36 are provided with respective through-holes extending through the bottom wall of the groove 23a so that the bus bars 36 can extend through the through-holes.

To prevent the retaining members 23 from peeling off from the glass panel 21 due to thermal expansion, each retaining member 23 is made of a material such as a metal or an alloy having a thermal expansion coefficient smaller than that of the resin panel 24 (polycarbonate); namely, a material having a thermal expansion coefficient closer to that of the glass panel 21. Such a material may be aluminum or an alloy thereof, for example. Further, the glass panel 21 is curved such that the central portion thereof in the lateral direction protrudes upward, and similarly, the light control panel also is curved to be convex upward to conform to the curve of the glass panel 21.

With reference to Figure 2 again, a deflector device 50 is mounted to the sunroof frame 5 to control the wind noises and/or airflow produced along the upper surface of the roof 1 when the vehicle is traveling while the roof opening 2a is kept open. The deflector device 50 includes: a blade 51 extending along the front edge of the opening 2a in the fixed roof 2; a pair of stays (or arm members) 52 extending in the fore-and-aft direction along either side edge of the opening 2a, where the stays 52 each have a base end portion including a rotation axis 52a spaced rearward from the blade 51 and jointly support the blade 51 at their free ends so as to be rotatable about the rotation axis 52a; and a pair of leaf springs 53, each of which is interposed between the corresponding stay 52 and side frame 7 to urge the stay 52 upward at all times. The deflector device 50 moves the blade 51 between a retracted position inside the roof 1 and a deployed position outside the roof 1 in response to forward and rearward movement of the sunroof panel 4, respectively. Specifically, when the sunroof panel 4 is moved from the closed position to the open position (rearward), the deflector device 50 moves the blade 51 from the retracted position to the deployed position, and when the sunroof panel 4 is moved from the open position to the closed position (forward), the deflector device 50 moves the blade 51 from the deployed position to the retracted position. The deflector device 50 constitutes a part of the electric connection structure for electrically connecting the battery 37 with the bus bars 36 of the light control films 26 to feed electric power to the light control films 26. Detailed description of the mode of operation of the deflector device 50 and the electric connection structure will be given later.

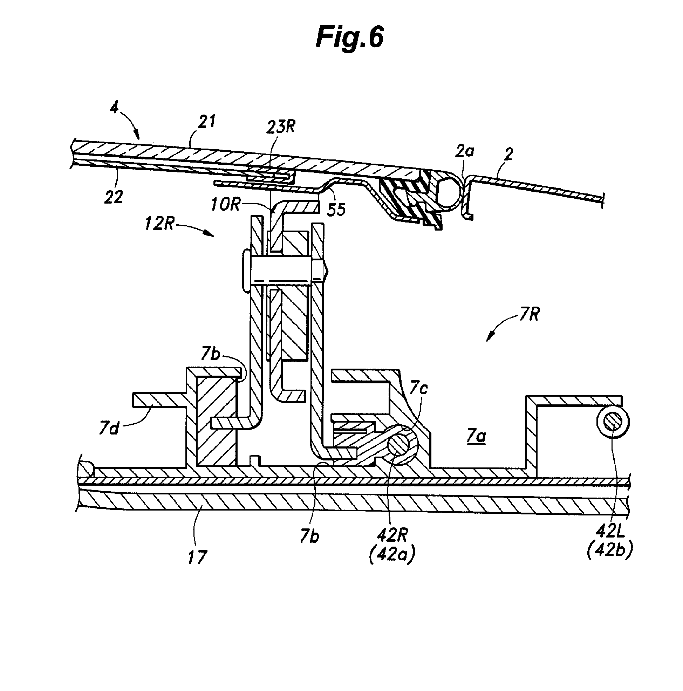

As shown in Figure 6, the side frames 7 disposed between the fixed roof 2 and the roof lining 17 are each provided with: a side drainage channel 7a for discharging rain water or the like to the outside of the vehicle, the drainage channel 7a having a rectangular U-shaped cross section with an open top; a guide rail 7b for guiding the corresponding rear slider 12 and front slider 11; and a cable guide channel 7c for guiding a corresponding push pull cable 42 connected to the rear slider 12.

With reference to Figure 1 again, the drive device 6 includes: a pair of push pull cables 42L and 42R having ends connected to the left and right sliders 12L and 12R, respectively, where each push pull cable 42 consists of a flexible cable made of steel and having a wire wrapped around an outer circumference thereof helically to form a driven gear 41; a drive gear 43 engaged with the driven gear of each push pull cable 42; and a motor 44 mounted to a right portion of the underside of the front frame 8 and rotatably driving the drive gear 43 via reduction gears not shown in the drawing.

Each push pull cable 42 includes a drive cable portion 42a which extends from a part engaged with the drive gear 43 to the corresponding rear slider 12 and transmits the drive force from the drive gear 43 to the rear slider 12 to drive the sunroof panel 4, and an idle cable portion 42b which extends from the part engaged with the drive gear 43 in the direction away from the drive cable portion 42a, where no load is applied to the idle cable portion 42b when the sunroof panel 4 is driven. The drive cable portion 42a of each push pull cable 42 includes a section extending along the side frame 7 and guided linearly by the cable guide channel 7c, and a section extending from the cable guide channel 7c to the part engaged with the drive gear 43 and guided by a corresponding drive pipe 45L or 45R mounted to the front frame 8 so as to include a curved part. The idle cable portion 42b is guided by a corresponding idle pipe 46L or 46R to include a curved part. The two push pull cables 42L and 42R extend in parallel with each other in a mutually opposed fashion in the section where they are engaged with the drive gear 43, and push and pull the corresponding rear sliders 12L and 12R in synchronization with each other in response to rotation of the drive gear 43.

In a state where the sunroof panel 4 is closed, the upper surface of the sunroof panel 4 forms a continuous surface jointly with the upper surface of the fixed roof 2. If the drive gear 43 is driven by the motor 44 to pull the push pull cables 42 in this state, the sunroof panel 4 is tilted up owing to the cam mechanism including the rear sliders 12, such that the rear end of the sunroof panel 4 is lifted above the fixed roof 2, as shown by phantom lines in Figure 2. Then, if the push pull cables 42 are pushed in this state, the sunroof panel 4 is tilted down back to the closed position. On the other hand, if the push pull cables 42 are pushed in the state where the sunroof panel 4 is closed, the cam mechanism including the rear sliders 12 causes the sunroof panel 4 to be tilted downward such that the rear end of the sunroof panel 4 is positioned below the fixed roof 2 and then causes the sunroof panel 4 to slide rearward together with the rear sliders 12 toward a fully open position at which the sunroof panel 4 is accommodated inside the roof 1 to expose the opening 2a. If the push pull cables 42 are pulled in this state, the sunroof panel 4 is moved in a reverse manner to close the opening 2a.

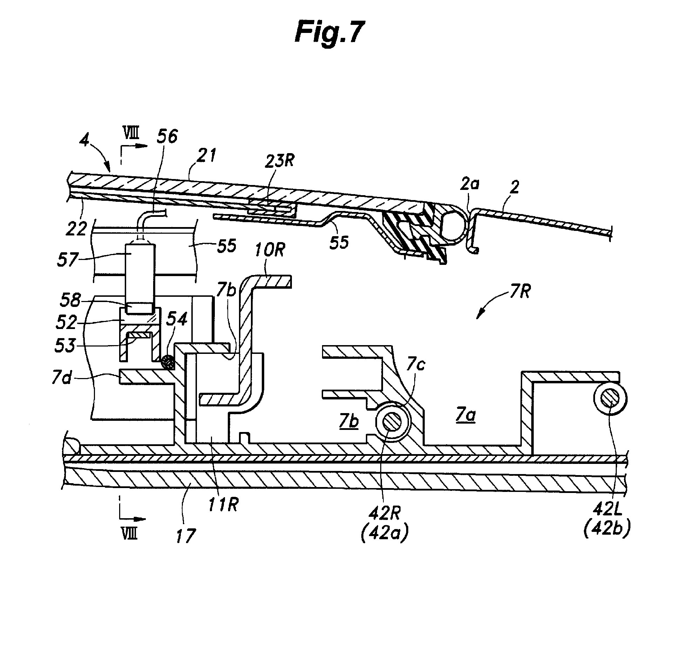

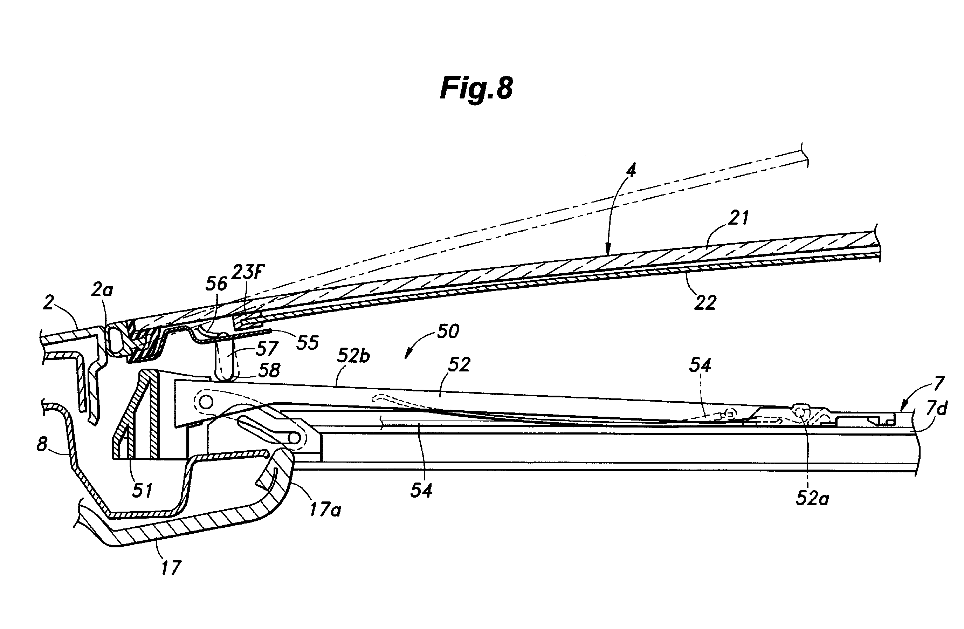

Next, detailed description will be given of the mode of operation of the deflector device 50 and the electric connection structure for the sunroof panel 4. As the electric connection structure is essentially symmetric about a central longitudinal axis of the vehicle body, the drawings referred to in the following description show only a right part of the structure. With reference to Figures 6 and 7, each side frame 7 has a horizontal wall 7d integrally formed therein such that the horizontal wall 7d projects laterally inward from the guide rail 7b and extends in the fore-and-aft direction. As shown in Figures 7 and 8, the horizontal wall 7d has an upper surface on which the corresponding stay 52 of the aforementioned deflector device 50 is rotatably supported. Each stay 52 is made of a material having a high electric conductivity, such as aluminum, and has a rectangular C-shaped cross section that opens downward. Each stay 52 has a part near the base end thereof having an outer surface onto which one end of a vehicle body-side lead wire 54 is soldered, the other end of the lead wire 54 being connected to the transformer 39.

On the other hand, the sunroof panel 4 includes a support member 55 extending along and mounted to a periphery of the glass panel 21, and a downward protrusion 57 is provided to each of the left and right front parts of the support member 55, more specifically, to each of the front parts of the support member 55 laterally coinciding with the two stays 52. Each downward protrusion 57 is made of a material having a high electric conductivity, such as aluminum, and is secured to the support member 55. In the illustrated embodiment, the support member 55 is made of a metallic material and has through-holes formed therein such that the downward protrusions 57 extend through the corresponding through-holes and are secured to the support member 55 via an insulating material. It is to be noted that the support member 55 may be made of a resin material or any other material having no conductivity so long as the support member 55 has sufficient rigidity and strength. Each downward protrusion 57 has a base end (upper end) to which one end of a panel-side lead wire 56 is soldered, the other end of the panel-side lead wire 56 being connected to the associated bus bar 36. Further, a panel-side electrode 58 is provided at the lower end of each downward protrusion 57, the panel-side electrode 58 being made of a material, such as copper, having an electric conductivity higher than that of the downward protrusion 57. In the illustrated embodiment, each downward protrusion 57 is a bar-shaped member having a semi-cylindrical lower end though the downward protrusion 57 may have any other suitable shape such as a cylindrical shape having a semi-circular lower end or may be made of a metallic plate having a curled lower end.

As is described in the foregoing, each stay 52 is urged upward at all times by the corresponding leaf spring 53, and when the sunroof panel 4 is at the closed position, the lower end of each downward protrusion 57 abutting the upper surface 52b of a part of the corresponding stay 52 adjacent to the free end thereof presses the stay 52 downward so that the blade 51 is moved to the retracted position. In this state, each panel-side electrode 58 is in contact with the upper surface 52b of the corresponding stay 52, and therefore, the vehicle body-side lead wires 54 are electrically connected to the respective panel-side lead wires 56. Namely, the upper surface 52b of each stay 52 serves as a vehicle body-side electrode connected to the corresponding vehicle body-side lead wire 54, while each of the downward protrusions 57 disposed on either lateral side of the sunroof panel 4 serves as a current collecting pole for collecting AC electric power.

When the sunroof panel 4 is moved to the tilt-up position indicated by phantom lines in Figure 8, each downward protrusion 57 also is tilted together with the sunroof panel 4. However, since the downward protrusions 57 are provided in the front part of the sunroof panel 4, contact between the panel-side electrode 58 provided at the lower end of each downward protrusion 57 and the upper surface 52b of the corresponding stay 52 is maintained. Thus, when the sunroof panel 4 is in an operation range from the closed position to the tilt-up position, electric power can be transmitted from the vehicle body-side lead wires 54 to the panel-side lead wires 56 via the deflector device 50 and the downward protrusions 57, and thus, it is possible to control the transparency of the light control films 26.

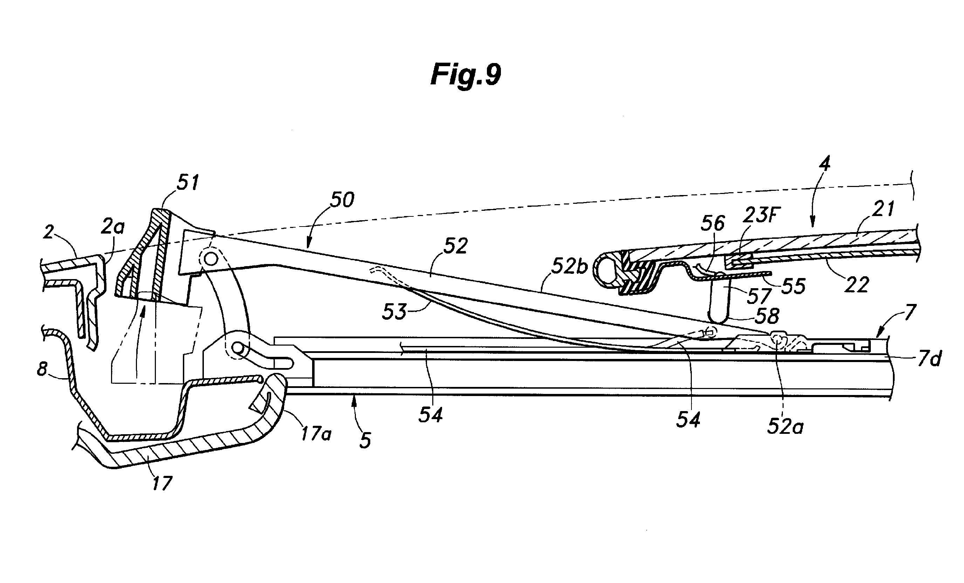

On the other hand, in the opening operation of the sunroof panel 4, as the sunroof panel 4 is moved rearward after being tilted downward from the closed position, each downward protrusion 57 is moved rearward together with the sunroof panel 4 after being tilted as a result of the tilting of the sunroof panel 4. During the rearward movement, the lower end (panel-side electrode 58) of each downward protrusion 57 slides along the upper surface 52b of the corresponding stay 52. As the downward protrusions 57 are moved rearward, the stays 52 urged by the leaf springs 53 rotate upward about the rotation axis 52a together with the blade 51 supported at the free ends of the stays 52. When the sunroof panel 4 is moved to a certain position between the fully closed position and the fully open position, the blade 51 is brought into a deployed state in which the blade 51 protrudes outward beyond the upper surface of the roof 1, as shown in Figure 9. If the sunroof panel 4 is further moved rearward from the position shown in Figure 9, the lower end 58 of each downward protrusion 57 is disengaged from the corresponding stay 52. In other words, each panel-side electrode 58 becomes no longer in contact with the corresponding vehicle body-side electrode (the upper surface 52b of the corresponding stay 52). In this state, electric power cannot be supplied from the battery 37 to each light control film 26 via the vehicle body-side lead wires 54 and the panel-side lead wires 56, and the light control films 26 become opaque.

As described in the foregoing, when the sunroof panel 4 is at the closed position, electric power can be supplied from the battery 37 to each light control film 26 owing to the downward protrusions 57 provided to the sunroof panel 4 such that the panel-side electrode 58 at the lower end of each download protrusion 57 is in contact with the upper surface 52b of the corresponding stay 52. Since a part of the deflector device 50 is used as the vehicle body-side electrodes, the electric connection structure for feeding electricity to the light control films 26 is realized as a simple structure including the downward protrusions 57 provided to the sunroof panel 4. It is to be noted that, for the purpose of establishing electric connection, an entirety of each stay 52 does not necessarily have to be made of an electrically conductive material, and it may be sufficient that only a portion of the upper surface 52b of each stay 52 is configured to be electrically conductive.

In the illustrated embodiment, the sunroof device 3 is configured so as to be capable of tilting up the sunroof panel 4. When the sunroof panel 4 is in an operation range between the closed position and the tilt-up position, the stays 52 are urged upward to keep the upper surfaces 52b thereof in contact with the corresponding panel-side electrodes 58, and therefore, electric power can be supplied to the light control films 26 during the tilt-up operation.

It is to be noted that, when the sunroof panel 4 is tilted up, the rear portion of the sunroof panel 4 is positioned apart from the stays 52 of the deflector device 50 by a larger distance as compared to the front portion of the same. In the illustrated embodiment, since the downward protrusions 57 are provided in the front portion of the sunroof panel 4, the downward protrusions 57 are moved only a small distance (almost no distance in this embodiment) during the tilt-up operation, and this contributes to maintaining contact between the panel-side electrodes 58 provided at the lower ends of the downward protrusions 57 and the vehicle body-side electrodes (upper surfaces 52 of the stays 52) during the tilt-up operation.

Further, in the illustrated embodiment, each stay 52 is rotatably supported by the corresponding side frame 7 and is urged upward by the corresponding leaf spring 53, and therefore, the upper surface 52b of the stay 52 is brought into contact with the corresponding panel-side electrode 58 reliably.

As described in the foregoing, in the illustrated embodiment, when the sunroof panel 4 is moved further rearward from the position shown in Figure 9, the light control films 26 become opaque and cannot be made transparent due to termination of voltage supply thereto. However, this does not significantly compromise the performance of the sunroof device 3, as it is usually undesired to make the light control films 26 transparent when the opening 2a has been opened to a certain extent. On the other hand, by limiting the positional range of the sunroof panel 4 in which electric power can be supplied to the light control films 26, it is possible to reduce the length of each stay 52.

Although the present invention has been described in the foregoing in terms of a preferred embodiment(s) thereof, it is obvious to a person skilled in the art that various alterations and modifications are possible without departing from the scope of the present invention which is set forth in the appended claims. For example, though in the illustrated embodiment each of the downward protrusions 57 is made of a material having a high electric conductivity and the downward protrusions 57 themselves function as electric conductors, it is possible to make the downward protrusions 57 of a material having a low electric conductivity and to arrange each panel-side lead wire 56 to extend along the corresponding downward protrusion 57 and connect the panel-side lead wire 56 to the corresponding panel-side electrode 58 directly. Further, though the light control panel 22 comprises two light control films 26 in the illustrated embodiment, the light control panel 22 may include only a single light control film 26. Yet further, though the light control panel 22 including the light control films 26 is secured to the glass panel 21 in the illustrated embodiment, the light control film(s) 26 may be incorporated into the glass panel 21. Further, an electric device other than the light control films 26 may be mounted to the sunroof panel 4 where the electric connection structure of the present invention may be used to establish electric connection between the electric device other than the light control films 26 and another electric device (such as the battery 37) mounted to the vehicle body. The sunroof device 3 does not have to include a structure for enabling tilting of the sunroof panel 4, and may be of an outer slide type in which the sunroof panel 4 is slidable over the fixed roof 2. It is also to be noted that not all of the component parts of the sunroof device 3 shown in the illustrated embodiment are necessarily indispensable, and they may be selectively used as appropriate for purposes.

Further, though in the illustrated embodiment the electric connection structure according to the present invention is used to supply voltage from the battery 37 to the light control films 26 of the sunroof panel 4, the electric connection structure may be used to enable transmission of electric signals between an electric device mounted to the sunroof panel 4 and another electric device mounted to the vehicle body. Though in the illustrated embodiment the upper surfaces 52b of the stays 52 of the deflector device 50 preferably serve as the vehicle body-side electrodes, the vehicle body-side electrodes may be provided to a part of the vehicle body other than the upper surfaces 52b of the stays 52, so long as the vehicle body-side electrodes and the panel-side electrodes can contact each other at least when the sunroof panel 4 is at the closed position.

The contents of the original Japanese patent application(s) on which the Paris Convention priority claim is made for the present application as well as the contents of the prior art references mentioned in this application are incorporated in this application by reference.

## Claims

1. An electric connection structure for a sunroof device (3) including a sunroof panel (4) having a first electric device (26) mounted thereto, the sunroof panel being slidable in a fore-and-aft direction of a vehicle body along guide rails (7b) to selectively open and close an opening (2a) formed in a roof (1) of the vehicle body, the electric connection structure comprising:
a pair of vehicle body-side lead wires (54) each having one end connected to a second electric device (37, 38, 39) mounted to the vehicle body;
a pair of panel-side lead wires (56) each having one end connected to the first electric device;
a pair of vehicle body-side electrodes (52b) provided to a part of the vehicle body and connected to the other ends of the vehicle body-side lead wires, respectively; and
a pair of panel-side electrodes (58) provided to a part of the sunroof panel and connected to the other ends of the panel-side lead wires, respectively,
wherein the vehicle body-side electrodes and the panel-side electrodes are arranged such that the panel-side electrodes contact the vehicle body-side electrodes, respectively, when the sunroof panel is at a closed position where the sunroof panel closes the opening.

2. The electric connection structure according to claim 1, wherein the sunroof device is configured to tilt up the sunroof panel, and the panel-side electrodes are provided in a front part of the sunroof panel such that the panel-side electrodes are kept in contact with the vehicle body-side electrodes, respectively, when the sunroof panel is in a positional range from the closed position to a tilt-up position.

3. The electric connection structure according to claim 1 or 2, further comprising:
a sunroof frame (5) including a pair of side frames (7) extending in the fore-and-aft direction along either side edge of the opening to serve as the guide rails and a front frame (8) connecting front ends of the side frames to each other; and
a deflector device (50) mounted to the sunroof frame and comprising a blade (51) extending along a front edge of the opening, the deflector device being configured to move the blade between a retracted position inside the roof and a deployed position outside the roof in response to forward and rearward movement of the sunroof panel, respectively,
wherein the vehicle body-side electrodes are provided to a part of the deflector device.

4. The electric connection structure according to claim 3, wherein the deflector device further comprises:
a pair of stays (52) extending in the fore-and-aft direction along either side edge of the opening, having a rotation axis (52a) spaced rearward from the blade, and
holding the blade so as to be rotatable about the rotation axis; and
an urging mechanism (53) configured to urge the stays upward,
wherein the vehicle body-side electrodes are provided to upper surfaces (52b) of the stays, respectively.

5. The electric connection structure according to claim 4, further comprising a pair of downward protrusions (57) provided to front parts of the sunroof panel laterally coinciding with the stays, respectively, wherein the panel-side electrodes are provided at lower ends (58) of the downward protrusions, respectively.

6. The electric connection structure according to any one of claims 1 to 5, wherein the first electric device comprises a light control film (26) having at least one of light-transmitting and light-scattering characteristics variable according to a voltage applied thereto, and the second electric device comprises a power supply system (37, 38, 39) for generating a voltage to be supplied to the light control film.
